# EUROPÄISCHE PATENTSCHRIFT

(11) **EP 1 876 015 B1**
(45) Veröffentlichungstag und Bekanntmachung des Hinweises auf die Patenterteilung: **01.02.2017**
(21) Anmeldenummer: 06013897.1
(22) Anmeldetag: 05.07.2006
(51) Int. Cl.: B32B 15/12, B32B 15/14

(54) **Flammhemmender Sonnenschutz-, Blendschutz- und Verdunkelungsartikel**
Flame retardant solar protection, anti-glare device and blind assembly
Rideau resistant au feu pour la protection solaire, comme pare-soleil et pour l'obscurcissement

(43) Veröffentlichungstag der Anmeldung: 09.01.2008
(73) Patentinhaber: Hueck Folien Ges.m.b.H, 4342 Baumgartenberg (AT)
(72) Erfinder: Aigner, Johann, 4352 Klam (AT)
(74) Vertreter: Landgraf, Elvira

(56) Entgegenhaltungen:
- WO-A-83/00356
- WO-A-91/00706
- WO-A-2005/054616
- DE-A1- 2 841 966
- DE-U1- 8 219 036
- FR-A- 2 464 682
- FR-A- 2 487 256
- FR-A- 2 572 272
- GB-A- 2 109 301

## Beschreibung

Die Erfindung betrifft flammhemmende Sonnenschutz-, Blendschutz und Verdunkelungsartikel, insbesondere für Fahrzeuge wie Wohnmobile, LKWs, Boote, Dachflächenfenster, Wintergärten, private und öffentliche Gebäude, Zelte, Persennings und dergleichen.

Sonnenschutzartikel für Fahrzeuge, Dachflächenfenster, Wintergärten und dergleichen sind bekannt und werden eingesetzt zur Verhinderung von durch Sonneneinstrählung verursachter Temperaturerhöhung im Inneren des Fahrzeugs, oder des Raumes, sowie ebenso als Verdunkelungsartikel oder Blendschutz.
Sonneneinstrahlung kann auch die Oberflächen im Fahrzeug erwärmen und damit ein Berühren der Oberflächen unangenehm für die Benutzer machen. Ferner kann direkte Sonneneinstrahlung Textilien, beispielsweise Sitzbezüge ausbleichen und unansehnlich machen.
Dabei wird durch die Verwendung von Sonnenschutz-, Blendschutz- und Verdunkelungsartikeln eine Isolierung sowohl gegen Wärme als auch gegen Kälte bewirkt, IR-Strahlen werden vom Eindringen abgehalten.

In einer bekannten Ausführungsform liegen diese Sonnenschutzartikel in Form eines Vorhangs, vorzugsweise in plissierter Form vor.
Diese plissierten Vorhänge müssen neben den sonstigen erforderlichen Eigenschaften, wie beispielsweise UV-Beständigkeit, Feuchtigkeitsbeständigkeit und Reflexionsvermögen, ein einwandfreies Rückstellverhalten aufweisen.

Aufgabe der Erfindung ist es einen für Sonnenschutz- oder Verdunkelungsartikel geeigneten Verbund bereitzustellen, der eine ausgezeichnete Plissierbarkeit, ein ausgezeichnetes Rückstellverhalten, hohe UV-Beständigkeit und Feuchtigkeitsbeständigkeit, sowie optimale Sonnenschutzeigenschaften aufweist und zudem schwer entflammbar ist. Ferner sollen die erfindungsgemäßen Artikel auch als Blendschutz verwendbar sein und damit Blendung durch Sonne verhindern, gegebenenfalls aber von innen durchsichtig sein, sodass der Blick nach draußen möglich ist.

Gegenstand der Erfindung ist daher ein mehrlagiges Verbundmaterial bestehend aus mindestens einer flexiblen Trägerfolie und einem Vlies oder Papier, dadurch gekennzeichnet, dass das Verbundmaterial mindestens zwei zwischen der flexiblen Trägerfolie und dem Vlies situierte, durch eine oder mehrere Zwischenschichten voneinander beabstandete metallisierte Schichten aufweist.

Als flexible Trägerfolien kommen vorzugsweise flexible transparente Kunststofffolien, beispielsweise aus PI, PP, MOPP, PE, PPS, PEEK, PEK, PEI, PU, PAEK, LCP, PEN, PBT, PET, PA, PC, COC, POM, ABS, PVC, PTFE, Fluopolymere, wie Teflon und dergleichen in Frage.
Die Kunststofffolien weisen vorzugsweise eine Dicke von 5 - 700 µm, bevorzugt 5 - 200 µm, besonders bevorzugt 5 - 50 µm auf.

Ferner können als Trägerfolien auch Papier oder Verbunde mit Papier, beispielsweise Verbunde mit Kunststoffen mit einem Flächengewicht von 20 - 500 g/m², vorzugsweise 40 - 200 g/m² verwendet werden. Ferner kann synthetisches Papier, beispielsweise Polyart^{®} oder Tesslin^{®}verwendet werden.

Besonders bevorzugt werden Folien aus Polyolefinen oder Polyester verwendet.

Unter Vliesen werden hier Textilien, wie Gewebe oder Vliese, wie Endlosfaservliese, Stapelfaservliese und dergleichen, die gegebenenfalls vernadelt und/oder kalandriert sein können, verstanden. Vorzugsweise bestehen solche Gewebe oder Vliese aus Kunststoffen, wie PP, PET, PA, PPS und dergleichen, es können aber auch Gewebe oder Vliese aus natürlichen, gegebenenfalls behandelten Fasern, wie Viskosefasern, Kenaf, Hanf, Sisal und dergleichen eingesetzt werden. Ferner können auch Mischfaservliese, Bikonstituentenfaservliese oder gefüllte Vliese, beispielsweise carbongefüllte Vliese eingesetzt werden.
Die eingesetzten Vliese oder Gewebe weisen ein Flächengewicht von etwa 20 g/m² bis 500 g/m² auf. Gegebenenfalls können die Vliese oder Gewebe oberflächen- und/oder volumenbehandelt sein.
Anstelle des Vlieses können auch Papier oder Verbunde mit Papier, beispielsweise Verbunde mit Kunststoffen mit einem Flächengewicht von 20 - 500 g/m², vorzugsweise 40 - 200 g/m² verwendet werden. Ferner kann synthetisches Papier, beispielsweise Polyart^{®} oder Tesslin^{®} verwendet werden. Die Papiere können gegebenenfalls oberflächen- oder volumenbehandelt sein.

Die äusseren Oberflächen des Verbundmaterials bildenden Materialien (Trägerfolie bzw. Vlies oder Papier) sind flammfest ausgerüstet.
Unter flammfester Ausrüstung wird hier ein entsprechendes Substrat verstanden, das mit einem flammhemmenden Wirkstoff behandelt ist, bzw. in das ein flammhemmender Wirkstoff gegebenenfalls bereits während der Herstellung des Substrats eingebracht wurde.
Als flammhemmende Wirkstoffe kommen dabei insbesondere ein- oder mehrfach halogenierte Kohlenwasserstoffe, wie ein- oder mehrfach bromierte oder chlorierte Kohlenwasserstoffe, Halogen/Antimon oder Metallhydroxide oder halogenfreie Substanzen wie Organo-Phosphor, Phosphate, roter Phosphor, Melamin und deren Derivate in Frage.
In einer weiteren bevorzugten Ausführungsform sind die beiden die äußeren Oberflächen des Verbunds bildenden Materialien mit UV-stabilisierenden Zusätzen, und/oder Fungiziden und/oder bakteriostatisch wirkenden Substanzen ausgerüstet. Dabei werden besonders vorteilhaft bekannte Verbindungen eingesetzt, die nicht tier- oder menschengiftig sind.

Als metallisierte Schichten kommen beispielsweise Schichten aus einem Metall, wie Al, Cu, Fe, Ag, Au, Cr, Ni, Zn, Ti und dergleichen, sowie Legierungen wie beispielsweise Cu/Al, AL/Mg, Cr/Al in Frage. Ferner können auch wellenlängenselektive Schichten, beispielsweise mehrschichtige metallische Schichten, Wechselschichten aus Metallen oder aus Metallen und Metallverbindungen (beispielsweise Metalloxiden) aufgebracht werden.

Die Beschichtungen können durch bekannte Verfahren, beispielsweise, Drucktechniken, Metallisieren, Bedampfen, Sputtern, Galvanisieren, Walzenauftragstechniken und dergleichen auf das Trägersubstrat aufgebracht werden.
Die metallisierten Schichten können vollflächig oder insbesondere bei einer Verwendung als Blendschutz auch partiell in Form eines Rasters oder als einander überlagernde Raster aufgebracht sein.

Die Dicke der metallischen Schicht beträgt vorzugsweise 10 - 150 nm.

Als Zwischenschichten, die zwischen den metallisierten Schichten situiert sind, sind beispielsweise Kunststofffolien oder Papier und/oder Lackschichten und/oder Klebeschichten und/oder Schutzlackschichten vorgesehen.

Die als Zwischenschichten vorgesehenen Kunststofffolien können flexible Kunststofffolien, wie beispielsweise aus PI, PP, MOPP, PE, PPS, PEEK, PEK, PEI, PU, Papier, PAEK, LCP, PEN, PBT, PET, PA, PC, COC, POM, ABS, PVC, Fluopolymere und dergleichen in Frage.
Die Kunststofffolien weisen vorzugsweise eine Dicke von 5 - 700 µm, bevorzugt 5 - 200 µm, besonders bevorzugt 5 - 50 µm auf.
Die Kunststofffolien können transparent, transluzent, opak, schwarz, weiß oder gefärbt sein, wobei die gefärbten Kunststofffolien vorzugsweise im Wesentlichen opak bzw. lichtundurchlässig sind.

Besonders bevorzugt werden Folien aus Polyolefinen oder Polyestern verwendet.
Als Zwischenschichten können auch Papier oder Verbunde mit Papier, beispielsweise Verbunde mit Kunststoffen mit einem Flächengewicht von 20 - 500 g/m², vorzugsweise 40 - 200 g/m² verwendet werden.
Ferner kann synthetisches Papier, beispielsweise Polyart^{®} oder Tesslin^{®} verwendet werden.
Die Papiere können gegebenenfalls oberflächen- oder volumenbehandelt sein.

Die Lackschichten können teilweise lichtdurchlässig oder vorzugsweise lichtundurchlässig sein, wobei die Lackschichten farbig, schwarz oder weiß ausgeführt sein können.

In Frage kommen vorzugsweise pigmentierte oder schwarze oder weiße oder gefärbte Lackschichten auf Basis von PET, PU, NC, Acrylaten, Polyether, PA, PE, PP, EVA, PVC und dergleichen. Als Pigmente kommen beispielsweise alle bekannten Pigmente, beispielsweise Pigmente auf anorganischer Basis, wie Titandioxid, Zinksulfid, Kaolin, ITO, ATO, FTO, Aluminium, Chrom- und Siliciumoxide, oder Pigmente auf organischer Basis, wie Phtalocyaninblau, i-Indolidingelb, Dioxazinviolett und dergleichen. Es können aber auch farbige und/oder verkapselte Pigmente, IR-Pigmente, photochrome Pigmente irisierende Pigmente, beispielsweise Iriodine^{®} und dergleichen verwendet werden.
Die Pigmente sind beispielsweise in chemisch, physikalisch oder reaktiv trocknenden Bindemittelsystemen eingebettet.
Als Farbstoffe kommen beispielsweise 1,1- oder 1,2. Chrom-Cobalt-Komplexe in Frage.
Vorzugsweise weisen die Pigmente bzw. die Farbstoffe eine Lichtechtheit > 5 auf.
Die Lackschicht kann auch geprägt sein oder beispielsweise gefüllt sein. Als Füllstoff kommen beispielsweise Glasperlen in Frage.

Die Dicke der Lackschicht beträgt vorzugsweise 0,2 - 10 µm, besonders bevorzugt 0,5 - 1 µm.

Als Klebeschichten kommen insbesondere Kaschierkleberschichten auf polymerer Basis beispielsweise auf Basis von Polyurethanen, Polyestern, Acrylcopylmeren, Ethylenacrylatcopolymer, Epoxiden, PVC, PA, PE, PP, Wasserglas oder deren Kombinationen oder Copolymere und dergleichen in Frage.

Es können aber auch Heißklebeschichten, reaktive Klebeschichten, thermisch trocknende, oder selbstklebende Klebeschichten verwendet werden. Die Klebeschicht kann pigmentiert und/oder schwarz, weiß oder gefärbt sein. Als Pigmente kommen beispielsweise alle bekannten Pigmente, beispielsweise Pigmente auf anorganischer Basis, wie Titandioxid, Zinksulfid, Kaolin, ITO, ATO, FTO, Aluminium, Chrom- und Siliciumoxide, oder Pigmente auf organischer Basis, wie Phtalocyaninblau, i-Indolidingelb, Dioxazinviolett und dergleichen. Es können aber auch farbige und/oder verkapselte Pigmente, IR-Pigmente, photochrome Pigmente irisierende Pigmente, beispielsweise Iriodine^{®} und dergleichen verwendet werden
Die Pigmente sind beispielsweise in chemisch, physikalisch oder reaktiv trocknenden Bindemittelsystemen eingebettet.
Als Farbstoffe kommen beispielsweise 1,1- oder 1,2 Chrom-Cobalt-Komplexe in Frage.
Vorzugsweise weisen die Pigmente bzw. die Farbstoffe eine Lichtechtheit > 5 auf.

In einer besonderen Ausführungsform weist die Klebeschicht elastische Eigenschaften auf, um Scherkräfte zwischen den Schichten auszugleichen. Der Grad der Elastizität kann beispielsweise durch vollflächigen oder partiellen Auftrag der Klebeschicht oder durch geeignete Wahl der Schichtdicke erfolgen. Ferner kann die Elastizität durch die Struktur der Klebeschicht eingestellt werden, besonders vorteilhaft sind hierbei hexagonale Strukturen.

Als Schutzlackschichten kommen physikalisch oder reaktiv trocknende Schichten auf polymerer Basis beispielsweise auf Basis von Polyurethanen, Polyestern, Acrylcopylmeren, Ethylenacrylatcopolymer, Epoxiden, Nitrocellulose, PVC Kolophoniumharzen, Alkyden und dergleichen in Frage.

Die Schutzschicht kann pigmentiert und/oder schwarz, weiß oder gefärbt sein. Als Pigmente kommen beispielsweise alle bekannten Pigmente, beispielsweise Pigmente auf anorganischer Basis, wie Titandioxid, Zinksulfid, Kaolin, ITO, ATO, FTO, Aluminium, Chrom- und Siliciumoxide, oder Pigmente auf organischer Basis, wie Phtalocyaninblau, i-Indolidingelb, Dioxazinviolett und dergleichen. Es können aber auch farbige und/oder verkapselte Pigmente, IR-Pigmente, photochrome Pigmente irisierende Pigmente, beispielsweise Iriodine^{®} und dergleichen verwendet werden
Die Pigmente sind beispielsweise in chemisch, physikalisch oder reaktiv trocknenden Bindemittelsystemen eingebettet.
Als Farbstoffe kommen beispielsweise 1,1- oder 1,2. Chrom-Cobalt-Komplexe in Frage.
Vorzugsweise weisen die Pigmente bzw. die Farbstoffe eine Lichtechtheit > 5 auf.

Die Schutzlackschicht kann ferner geprägt sein.

Diese Schichten können durch bekannte Verfahren, beispielsweise, Drucktechniken, Walzenauftragstechniken und dergleichen auf das Trägersubstrat aufgebracht werden.

In einer bevorzugten Ausführungsform kann der erfindungsgemäße Verbund wie folgt aufgebaut sein:
PEN-Folie schwer entflammbar ausgerüstet
Lackschicht farbig oder metallische Schicht
Kaschierkleber farbig
Metallische Schicht
PET-Folie perforiert
Metallische Schicht
Schutzlack geprägt
Kaschierkleber gefärbt
Synthetisches Papier (Polyart^{®} oder Tesslin^{®})
oder
PEN-Folie schwer entflammbar ausgerüstet
Lackschicht farbig oder metallische Schicht
Kaschierkleber weiß
Metallische Schicht
PET-Folie
Metallische Schicht
Kaschierkleber gefärbt
Metallische Schicht
PET-Folie weiß
Kaschierkleber
Vlies schwer entflammbar ausgerüstet.

Die erfindungsgemäßen Verbunde können durch die im folgenden beschriebenen Verfahrensschritte hergestellt werden:
Bereitstellen einer Trägerfolie
Metallisieren und/oder Laminieren, Bedrucke, Prägen der Trägerfolie,
Bereitstellen eines weiteren Substrats,
Kaschieren der beiden Substrate gegeneinander,
Lackieren, bedrucken, Prägen oder metallisieren des Verbunds
Kaschieren gegen ein weiteres Substrat (Vlies oder Papier),
gegebenenfalls anschließendes Plissieren des Verbunds.

Die erfindungsgemäßen Verbunde weisen eine gute Plissierbarkeit, ein einwandfreies Rückstellverhalten auch noch nach mindestens 10.000 Bewegungen auf, wobei durch geeignete Auswahl der Schichtdicken der einzelnen Schichten der Verbunde auf das gewünschte Rückstellverhalten erfolgen kann.
Ferner weisen die Verbunde eine hohe Packungsdichte (kleine Biegeradien beim Plissieren, dadurch minimales Raumerfordemis), eine ausgezeichnete Hydrolysebeständigkeit bei 90% Luftfeuchte, eine hohe UV-Beständigkeit auf der Foliensichtseite, die der Sonneneinstrahlung beispielsweise durch eine Glassscheibe ausgesetzt ist, eine ausgezeichnete Black-Out Wirkung auch an den Kanten nach der Plissierung und erfüllen die Kriterien der Schwerentflammbarkeit nach den entsprechenden Normen.

### Beispiele

### Beispiel 1:

PEN-Folie schwer entflammbar ausgerüstet 19 µm
Lackschicht farbig oder Metallische Schicht (Al) 0,5 µm / 32 nm
Kaschierkleber weiß 3 g/m² Polyether
Metallische Schicht 40 nm
PET-Folie schwarz 15 µm
Metallische Schicht 40 nm
Schutzlack weiß 3 g/m² Polyester
Kaschierkleber 8 g/m² Polyurethan
Vlies schwer entflammbar ausgerüstet 60 - 70 g/m² PET

Der Verbund wurde folgenden Tests unterzogen:
Flammfestigkeit :
   Der geprüfte Folienverbund genügt den Anforderungen gemäß § 571.302 der US-Bundesvorschrift Nr. 302 hinsichtlich der Feuerfestigkeit von Werkstoffen, die für die Innenausstattung von Kraftfahrzeugen verwendet werden.

UV-Beständigkeit für Anwendung hinter Glas :
Keine Veränderung nach 1000 Stunden Xenotest
Testbedingungen: Filter Xenochrome 320 nm Suprax Zylinder nach ISO 12040

Hydrolysestabilität :
Testparameter: 60° C, 95% Luftfeuchte, 2 Wochen
Keine Korrosion der Aluschichten

Thermische Isolationswirkung :
Direkter Strahlungstransmissionsgrad J 0,00 %
Strahlungsreflexionsgrad D 0,67 %

### Beispiel 2:

PEN-Folie schwer entflammbar ausgerüstet 23 µm
Lackschicht farbig oder Metallische Schicht (Al) 2 g/m² PET/PVC
Kaschierkleber weiß 4 g/m² Polyether
Metallische Schicht 20 nm
PET-Folie 23 µm
Metallische Schicht 20 nm
Kaschierkleber schwarz 4 g/m² Polyether
Metallische Schicht 25 nm
PET-Folie weiß 23 µm
Kaschierkleber 4 g/m² (Polyurethan)
Vlies schwer entflammbar ausgerüstet 60 -70 g/m²

Der Verbund wurde folgenden Tests unterzogen:
Flammfestigkeit :
   Der geprüfte Folienverbund genügt den Anforderungen gemäß § 571.302 der US-Bundesvorschrift Nr. 302 hinsichtlich der Feuerfestigkeit von Werkstoffen,
   die für die Innenausstattung von Kraftfahrzeugen verwendet werden.

UV-Beständigkeit für Anwendung hinter Glas :
Keine Veränderung nach 1000 Stunden Xenotest
Testbedingungen: Filter Xenochrome 320 nm Suprax Zylinder nach ISO 12040

Hydrolysestabilität :
Testparameter: 60° C, 95% Luftfeuchte, 2 Wochen
Keine Korrosion der Aluschichten

Thermische Isolationswirkung :
Direkter Strahlungstransmissionsgrad J 0,00 %
Strahlungsreflexionsgrad D 0,67 %

## Patentansprüche

1. Mehrlagiges Verbundmaterial bestehend aus mindestens einer flexiblen Trägerfolie und einem Vlies oder Papier, **dadurch gekennzeichnet, dass** Trägerfolie und/oder Vlies oder Papier flammfest ausgerüstet sind, das Verbundmaterial mindestens zwei zwischen der flexiblen Trägerfolie und dem Vlies oder Papier situierte, durch eine oder mehrere Zwischenschichten voneinander beabstandete metallisierte Schichten aufweist.

2. Verbundmaterial nach Anspruch 1, **dadurch gekennzeichnet, dass** die metallisierten Schichten einschichtig oder als Multilayerschichten vorliegen.

3. Verbundmaterial nach Anspruch 1 oder 2, **dadurch gekennzeichnet, dass** als Zwischenschichten, die zwischen den metallisierten Schichten situiert sind, beispielsweise Kunststofffolien und/oder Lackschichten und/oder Klebeschichten und/oder Schutzlackschichten vorgesehen sind.

4. Verbundmaterial nach einem der Ansprüche 1 bis 3, **dadurch gekennzeichnet, dass** die Lackschichten geprägt oder gefüllt sind.

5. Verbundmaterial nach einem der Ansprüche 1 bis 4, **dadurch gekennzeichnet, dass** die Trägerfolie aus Polyolefinen, PEN oder Polyester besteht.

6. Verbundmaterial nach einem der Ansprüche 1 bis 5, **dadurch gekennzeichnet, dass** das Vlies aus PET besteht.

7. Verbundmaterial nach einem der Ansprüche 1 bis 6, **dadurch gekennzeichnet, dass** die Zwischenschichten aus einer Kunststofffolie aus Polyolefinen oder Polyester und/oder aus einer pigmentierten oder schwarzen oder weißen oder gefärbten Lackschicht und/oder aus einer pigmentierten oder schwarzen, weißen oder gefärbten Klebeschicht auf polymerer Basis und/oder aus einer schwarzen, weißen oder gefärbten oder pigmentierten Schutzlackschicht auf polymerer Basis besteht.

8. Verbundmaterial nach einem der Ansprüche 1 bis 7, **dadurch gekennzeichnet, dass** die metallische Schicht aus Al, Cu, Fe, Ag, Au, Cr, Ni, Zn, Ti oder Legierungen wie Cu/Al, AI/Mg, Cr/Al und/oder Metalloxiden besteht.

## Claims

1. Multilayer composite material composed of at least one flexible backing film and one non-woven or paper, **characterized in that** backing film and/or non-woven or paper have been rendered flame-retardant, the composite material has at least two metallized layers separated from one another by one or more intermediate layers and situated between the flexible backing film and the non-woven or paper.

2. Composite material according to Claim 1, **characterized in that** the metallized layers are single or multiple layers.

3. Composite material according to Claim 1 or 2, **characterized in that** examples of intermediate layers provided, situated between the metallized layers, are plastics films and/or coating layers and/or adhesive layers and/or protective coating layers.

4. Composite material according to any of Claims 1 to 3, **characterized in that** the coating layers have been embossed or filled.

5. Composite material according to any of Claims 1 to 4, **characterized in that** the backing film is composed of polyolefins, PEN or polyester.

6. Composite material according to any of Claims 1 to 5, **characterized in that** the non-woven is composed of PET.

7. Composite material according to any of Claims 1 to 6, **characterized in that** the intermediate layers are composed of a plastics film made of polyolefins or polyester and/or of a pigmented or black or white or coloured coating layer and/or of a pigmented or black, white or coloured adhesive layer based on polymer and/or of a black, white or coloured or pigmented protective coating layer based on polymer.

8. Composite material according to any of Claims 1 to 7, **characterized in that** the metallic layer is composed of Al, Cu, Fe, Ag, Au, Cr, Ni, Zn, Ti or alloys such as Cu/Al, Al/Mg, Cr/Al and/or metal oxides.

## Revendications

1. Matériau composite multicouche constitué d'au moins un film de support flexible et d'un non-tissé ou de papier, **caractérisé en ce que** le film de support et/ou le non-tissé ou papier sont ignifugés, **en ce que** le matériau composite présente au moins deux couches métallisées situées entre le film de support flexible et le non-tissé ou papier, espacées les unes des autres par un ou plusieurs couches intermédiaires.

2. Matériau composite selon la revendication 1, **caractérisé en ce que** les couches métallisées sont présentes sous une forme monocouche ou sous la forme d'un ensemble multicouche.

3. Matériau composite selon la revendication 1 ou 2, **caractérisé en ce que** sont prévus en tant que couches intermédiaires, qui sont situées entre les couches métallisées, par exemple des films en plastique et/ou des couches de peinture et/ou des couches de colle et/ou des couches de peinture de protection.

4. Matériau composite selon l'une quelconque des revendications 1 à 3, **caractérisé en ce que** les couches de peinture sont estampées ou sont remplies.

5. Matériau composite selon l'une quelconque des revendications 1 à 4, **caractérisé en ce que** le film de support est constitué de polyoléfines, de PEN ou de polyester.

6. Matériau composite selon l'une quelconque des revendications 1 à 5, **caractérisé en ce que** le non-tissé est constitué de PET.

7. Matériau composite selon l'une quelconque des revendications 1 à 6, **caractérisé en ce que** les couches intermédiaires sont constituées d'un film en plastique composé de polyoléfines ou de polyester et/ou d'une couche de peinture pigmentée ou noire ou blanche ou colorée et/ou d'une couche de colle pigmentée ou noire, blanche ou colorée sur une base polymère et/ou d'une couche de peinture de protection noire, blanche , ou colorée ou pigmentée sur une base polymère.

8. Matériau composite selon l'une quelconque des revendications 1 à 7, **caractérisé en ce que** la couche métallique est constituée de Al, Cu, Fe, Ag, Au, Cr, Ni, Zn, Ti ou d'alliages tels que Cu/Al, Al/Mg, Cr/Al et/ou d'oxydes de métal.
